# EUROPEAN PATENT SPECIFICATION

(11) **EP 1 386 034 B1**
(45) Date of publication and mention of the grant of the patent: **31.05.2006**
(21) Application number: 01998684.3
(22) Date of filing: 21.11.2001
(51) Int. Cl.: D21B 1/10, B02C 18/38

(54) **APPARATUS FOR DISINTEGRATING AND COMPACTING CELLULOSE CONTAINING MATERIAL**
VORRICHTUNG ZUM DESINTEGRIEREN UND KOMPAKTIEREN VON CELLULOSEHALTIGEM MATERIAL
APPAREIL PERMETTANT DE DESINTEGRER ET DE COMPACTER UN MATERIAU CONTENANT DE LA CELLULOSE

(30) Priority: 29.11.2000 SE 0004376
(43) Date of publication of application: 04.02.2004
(73) Proprietor: NORDIN, Ulf, S-663 02 Hammarö (SE)
(72) Inventor: NORDIN, Ulf, S-663 02 Hammarö (SE)
(74) Representative: Johansson, Lars-Erik
(86) International application number: PCT/SE2001/002564
(87) International publication number: WO 2002/044465

(56) References cited:
- GB-A- 2 255 517
- US-A- 4 253 615
- US-A- 4 844 363
- US-A- 5 611 268

## Description

### TECHNICAL FIELD

The invention relates to a apparatus for disintegrating cellulose containing package and wrapping-materials containing corrugated cardboard and forming compacted units of the disintegrated material with a higher density than the material had before disintegration and compacting (see for example document US-A-4 844 363).

### BACKGROUND OF THE INVENTION

Waste material in the shape of used package and wrapping materials contains a large share of corrugated cardboard. This is very valuable for fibre recycling, alternatively as fuel. The traditional way of taking care of the cellulose containing waste material is to bale it and there-after transport it, in this condition, to facilities for fibre recycling or combustion. The disadvantage of this way is that corrugated cardboard is a very bulky commodity and also that the bales get a low density, which makes both the transport, storage and handling at the receiver more expensive. With existing baling presses it is then possible to reach a density of about 130 - 140 kg/m³, when the material is loaded in containers. Also, it is known to compress the material at high pressure i briquette machines. These briquettes, which may have the final form of cubes of about one litre or cylinders, may then be transported as bulky commodity for fibre recycling or combustion. In the bulky commodity each of the briquettes have high density, but the close packing of the briquettes in the bulky commodity is fairly bad, why the resulting density in this case too, is relatively low: Furthermore, the briquettes pressed very firmly are difficult to decompose for fibre recycling and by their form and compactness they are not a very ideal fuel.

The subject of the invention is to deal with the problem above and to provide an apparatus giving a material easy to bale to very high density and also easy to decompose for fibre recycling and/or suitable for efficient combustion.

The invention aims in particular at providing an apparatus satisfying the dealer's need of equipment for taking care of cellulose containing package and wrapping materials, containing corrugated cardboard, preferably the greater part corrugated cardboard, which shall be prepared to be sent to facilities for fibre recycling, combustion or destruction. Among the demands put forward on such an apparatus may be mentioned that it may not take up a lot of space, that it is easy to handle also for non-technical staff, that it gives a product with desirable qualities for subsequent transport, handling and use, and that it may not be too expensive.

However, the fact that the apparatus according to the invention is developed considering the dealer's need does not exclude that the apparatus may also be used within totally different trades where a need for efficient devices for disintegrating and compacting cellulose containing material of the above mentioned kind exists, for example in the industry and in larger office blocks.

The invention is defined by the technical features of claim 1.

Dependent claims 2 to 16 define further preferred embodiment of the invention.

Further characteristics and aspects of the invention will be clear from the following description of a preferred embodiment.

### BRIEF DESCRIPTION OF DRAWINGS

In the following description of a preferred embodiment reference will be made to the accompanying drawings, in which
- Fig. 1: shows a perspective view of the apparatus according to the preferred embodiment, also partly showing the interior of a press section in the apparatus,
- Fig. 2: shows the same apparatus, partly as an "x-ray photo", in a side view,
- Fig. 3: shows in a cross-section a part of a disintegrator, forming a part of the apparatus,
- Fig. 4 and Fig. 5: shows detailed pictures of the disintegrator,

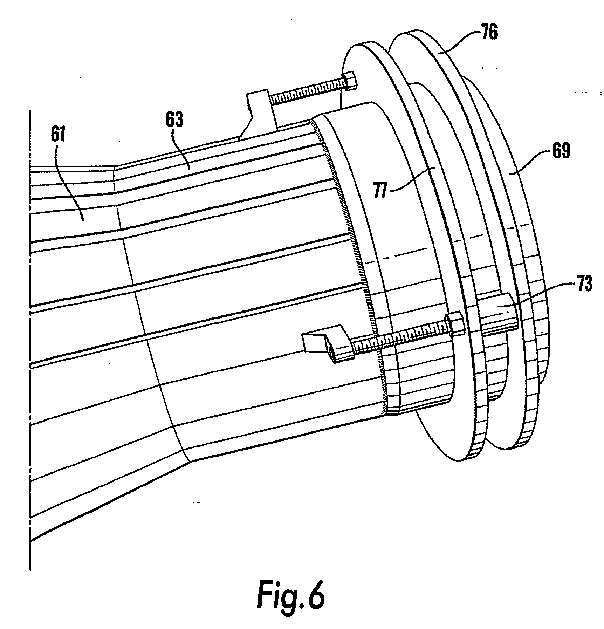

- Fig. 6: shows the discharge section of the apparatus in a perspective view,
- Fig. 7: shows a section of the parts in the area of the discharge opening of the apparatus in a larger scale, partly as a cross-section, and
- Fig. 8: shows schematically a control system for automatic operation of the apparatus.

### DESCRIPTION OF A PREFERRED EMBODIMENT

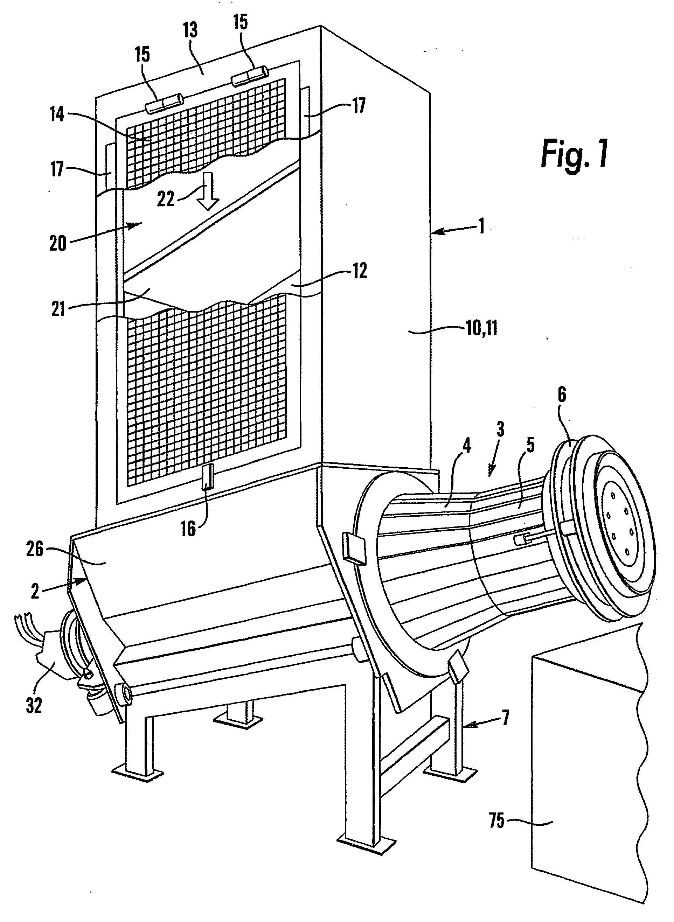

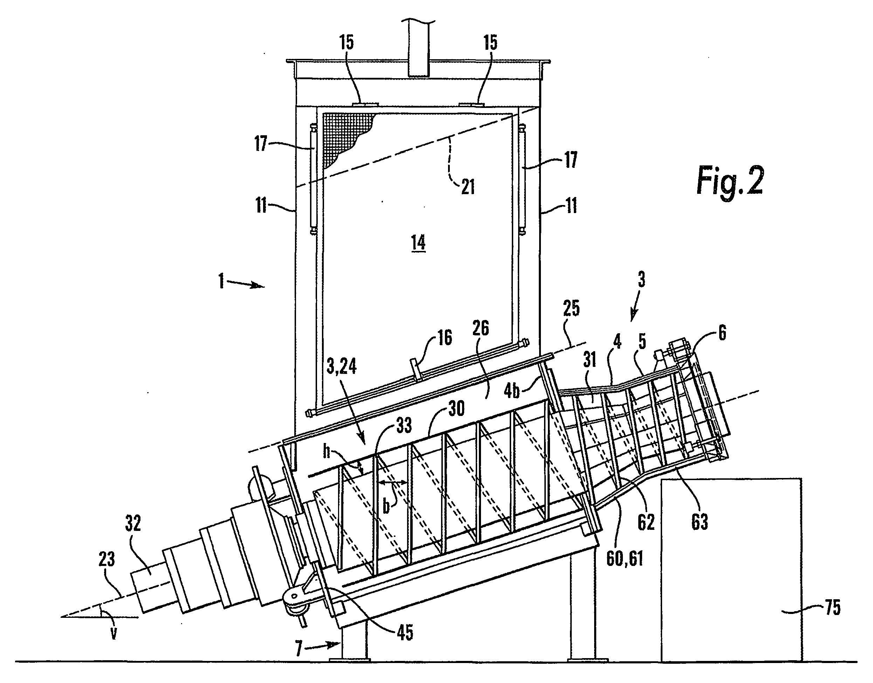

The machine or apparatus shown in Fig. 1 and 2 has the following main parts, viz. a press section 1, which at the same time constitutes the intake section of the material that shall be prepared, a disintegrator 2 and a compactor 3. The compactor 3 in turn consists of a precompactor 4, an intermediate compactor 5 and a terminal forming section 6, simultaneously being discharge section. Further, the apparatus comprises a stand 7 with four legs.

The press section/intake section 1 comprises a vertical housing 10 with four vertical walls; a pair of sidewalls 11, a rear wall 12 and a front wall 13. In the front wall 13 there is a hatch 14 that is rotatable about a horizontal axis of rotation by a pair of hinges 15 in the upper edge of the hatch 14. The hatch may be closed with a handle 16. To facilitate the manoeuvering of the hatch and the movement between closed and open position and vice versa, there is a pair of double-acting actuators 17 in the shape of pneumatic dampening cylinders of known construction.

In the vertical housing 10 in the press section 1 there is a press, generally indicated 20, which comprises a press plate 21 and actuator 22, symbolised by an arrow, arranged to be able to move the press plate 21 in the vertical direction in the housing 10. The press plate 21 slopes from the left of the two sidewalls 11 upwardly toward the right of the sidewalls 11 at the same angle of inclination v as the axis of rotation 23 of the movable integrated device 22 in the disintegrator and the compactor, which will be described in the following. The press plate 21 may be offset from an upper position close to the top of the housing 10 to a lower position about the area of the sloping plane 25 which form the transition between the vertical press housing 10 and a disintegrator housing 26.

The integrated movable device 24 comprises a rear section in the shape of a cutter 30 in the area of the disintegrator housing 26 and a front section in the shape of a compacter screw 31 in the area of the compactor 3. The integrated device 24 (the cutter 30 and the compacter screw 31) is rotatable about the axis of rotation 23 by means of a hydraulic motor 32,that is slow moving; typically 2 - 10 rotations/minute or for example 5 rotations/minute. The required power is low; according to the example 5,5 kW, which is made possible by the calm and even operation of the motor and by avoiding extreme load peaks, which will be described in the following. Also, due to the low speed, there is no dusting when the material is torn in the dispenser.

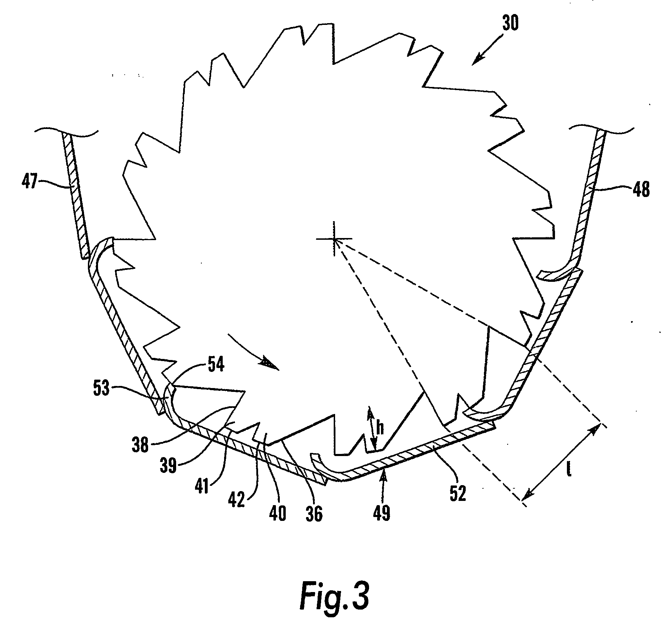

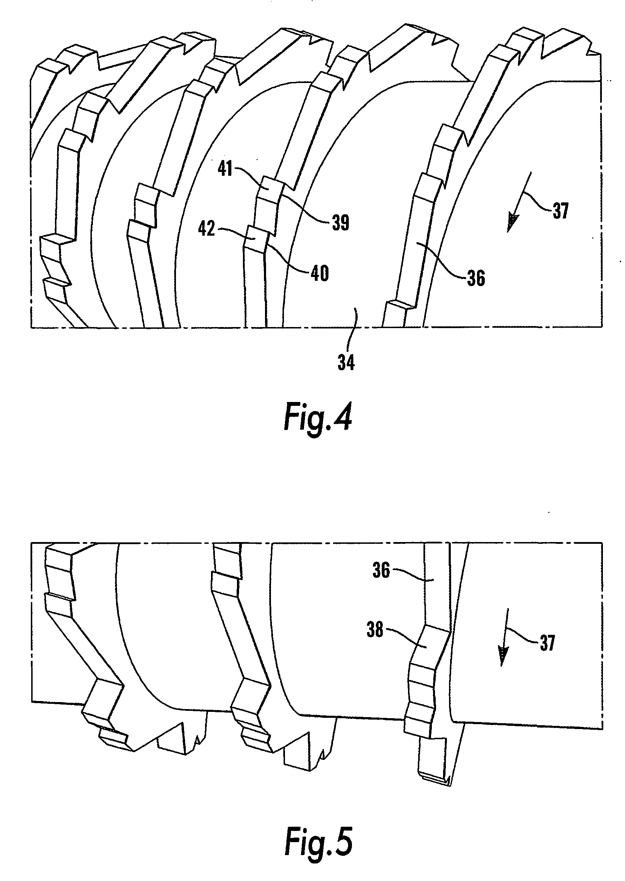

The cutter 30 is shaped as a double-threaded cylindrical screw, i.e. with two threads per screw pitch, and cylindrical core. More precisely, the cutter 30 is composed by a very large, double-threaded worm hob with thin threads 33 or knives with straight rakes and wide cylindrical thread root 34. The threads/knives 33 are saw-tooth-shaped. In Fig. 4 and Fig. 5 the cutting teeth have been indicated 35. The tooth faces 36 are inclined backwards. The cutter's direction of rotation has been indicated by the arrow 37. The tooth backs 38 are essentially straight. The cutting teeth 35 are double-edged. The cutting edges have been indicated 39 and 40. The tips 41 and 42 of the cutting edges 39 and 40 respectively form sections of cylinders but may yet be described as essentially plane. The cutting height **h**, i.e. the radial distance from the thread root 34 to the tips 41, 42, of the cutting edges amounts to about 65 mm. The shortest distance **b**, Fig. 2, between the adjacent threads/knives 33 amounts to about 125 mm. The tooth length, **I**, Fig. 3, is about 125 mm, i.e. the cutting teeth 35 are about the same length as the breadth **b** between adjacent threads/knives 33. The thickness of the threads/knives 33 is about 20 mm.

The disintegrator housing 26 has a rear end wall 45 with an inlet for a drive shaft for rotation of the rotatable device 24, comprising the cutter 30 and the compacter screw 31, the drive shaft extending from the hydraulic motor 32, a front upper end wall 46 with an inlet for the integrated movable device 24 and for the material which have been disintegrated in the disintegrator 2, a pair of side walls 47, 48 and a curved bottom section 49. Together, the end walls 45, 46 and the side walls 47, 48 and the bottom section 49 form a trough, which constitutes said compactor housing 26.In this house the cutter 30 rotates about its axis of rotation 23.

The curved bottom section 49 of the disintegrator housing 26 is composed of a number of axial plates 52, extending along the full length of the disintegrator housing 26. The plates 52 are plane along the main part of their breadth but comprise an inwardly facing section 53 at the longitudinal edge facing the cutter's direction of rotation. The inwardly facing sections 53 end with a cut 54 at the same radial level as the tips 41, 42 of the cutting edges 39, 40. The cuts 54 are in other words coordinated to coact with the cutting edges 39, 40 to disintegrate the working material in the disintegrator 2 by cut-and/or tear effect. The width of the plates 52, i.e. the distance between the inwardly facing sections 53 and their cuts 54, corresponds approximately to the length of 1 ½ to 2 cutting teeth.

The compacter screw 31 is just about half the length of the cutter 30. The precompactor 4 and the intermediate compactor 5 are of about equal length. In the area of the precompactor 4 both the compacter screw and the screw housing 60 are conically tapered. This conically tapered section of the screw housing have been indicated 61. The height of the thread in the area of the precompactor 4 is constant but the pitch angle increases a few degrees, for example 3° per rotation of the screw thread in the feeding direction of the screw both in the precompactor 4 and in the intermediate compactor 5. Thus the goods may expand in the axial direction in the thread hatch relative to the radial compression of the goods. Thus, the friction pressure becomes lower at the thread flanks than at the screw housing, counteracting the goods from rotating with the screw, thereby avoiding the forming of plugs. The compacter screw 31 is single threaded along its full extension. The threads 62 have straight flanks similar to the threads/knives 33 in the area of the disintegrator 2.

Also the thickness is essentially the same. The taper of the screw 61 in the area of the precompactor 4, i.e. the top angle of the frustrum of the cone, is about 30°. The length of the frustrum of the cone in the area of the precompactor 4 is about half of the diameter of the cone at the base, i.e. closest the disintegrator. 2. Thus, a substantial reduction of the diameter of the screw housing is achieved over a short distance. Also, this means a substantial absolute compression of the material in the thread channel, in spite of the height of the thread being constant. The purpose of the precompression and the shape of the precompactor 4 is to achieve a substantial compression of the material over a short distance and to allow a large size for the inlet to the compactor, which, in its turn, makes it possible to design the cutter 30, the disintegrator housing 26 and the press housing 10 at dimensions large enough that the integrated device may receive and disintegrate very large boxes and slabs. Typically, the cutter 30, at its end facing the screw compressor, has an outer diameter of 500 - 1000 mm. The inlet opening of the compactor 2 has the same dimension. The outlet opening of the compactor has a diameter of 250 - 600 mm. Within the scope of these intervals the diameter of the compactor decreases between the inlet opening and outlet opening at least 25 % and at the most 75 %.

The intermediate compactor 5 is designed to further compress the cellulose-containing working material and to pull the precompressed material apart and flatten it, giving it at shape suitable for the following baling and possible disclosing in relation to fibre recycling. Hence, the core of the screw 31 in the area of the intermediate compactor 5 is conically diverging in this area in the feeding direction of the screw, at the same time as the screw housing 60 in this section 63 is cylindrical, meaning that the height of the thread decreases in the feeding direction of the screw in the area of the intermediate compactor 5.

Similar to the bottom section 49 of the disintegrator housing 26, the screw housing 60 is assembled by longitudinal plates 65, welded together, with edge sections facing inwards against the screw's 31 direction of rotation. These overlapping plate sections serve, in this case, not as cutting devices but to contribute to displace the working material axially in the thread channels instead of rotating along with the screw.

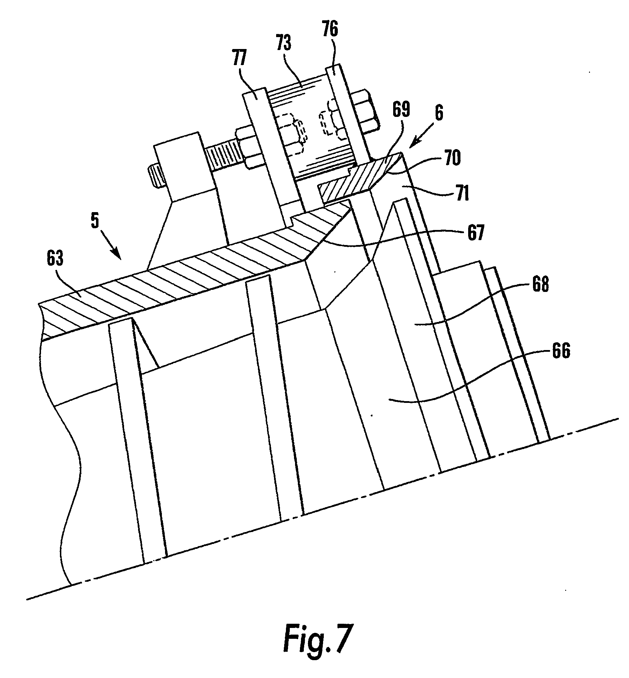

In the terminal forming section/the discharge section 6 both the core of the screw and the inside of the screw housing widen conically. Both these conical sections are indicated 66 and 67 respectively in Fig. 7. They have essentially the same taper, the same axial length and are orientated in the same axial zone of the compactor. Outside of the conical section 66 of the core of the screw follows a conical end section 68 having taper substantially larger than within the section 66. The angle of inclination of the side of the cone in the area of 68 is about 55°.

The conical section 67 constitutes the end of the straight, cylindrical part 63 of the screw housing 60, but the integrated screw housing 60 ends with a ring shaped section 69, widening conically at the inside of the final part in the area of, and beyond, the conical end section 68 of the core of the screw. The conical surface of the ring is indicated 70. The taper of this section 70 is substantially less than in the terminal section 68 of the core of the screw. This means that the passage 71 between the conical surfaces 68 and 70 is tapered in axial direction, meaning, in its turn, that the compressed material being pressed out through the passage 71 exerts a force on the surface 70. This force has a component directed backwards thus striving to press the ring 69 backwards. This backwards directed movement is in its turn counteracted by a number of prestressed springs 73 arranged between a front ring 76 fixedly connected to the movable ring 69, and a rear ring 77 being adjustably connected to the jacket part 63 of the screw housing for adjusting the prestress of the springs. By cooperation between the cooperating force on the ring 69 and the springs 73 operating in the opposite direction, a balance may always be obtained by the displacement of the ring 69, so that approximately the same compressive pressure always is obtained independent of the type of material processsed and compressed in the apparatus. This means in its turn that the material being fed out through the discharge section 6 obtains a proportionately even degree of compression, which is a positive quality factor. To take care of the compressed material there is a container 75 beneath the discharge section 6.

The apparatus described is meant to operate in the following way. After that plastic, garbage and/or other material not wanted to be part of the material to be disintegrated and compacted, have been sorted out, the rest of the material, mainly consisting of corrugated cardboard, is being thrown into the housing 10, after that the handle 16 has been turned, and the hatch 14 swung up by means of the lifting cylinders 17 and turned to an essentially horizontal position in the hinges 15. The press 20 with the press plate 21 is now in its upper position standing still. The throwing of the material into the housing 10 through the opened hatch 14 may be done manually. However, of course different loading devices are possible, but an advantage is that the loading may be done in an easy way through the opened hatch at a suitable working height.

When the hatch is closed and sealed again, the press 20 is started, at which the actuators 22 press down the press plate 21, which presses the goods that is loaded in the press section 10 down towards the cutter 30, at the same time as this, as the whole movable device 24, starts to be rotated by the motor 32.

The to some degree compressed material in disintegrating housing 26 and press section 1 is pressed with some force against the cutter 30. The, thus, compressed goods is now torn to pieces by cooperation between the cutting teeth 35 and the, inwardly facing sections 54, operating as cutters, in the bottom section of the disintegrating housing 26. The direction of rotation is shown by the arrow 37. The distance **d** between the adjacent threads/knives 33 and the length of the cutting teeth 35 are so chosen that the pieces of material obtained gets a typical size of about 1 dm³, some a little bigger, but many a lot smaller.

The cutter 30 operates also as a feeding screw and pushes the disintegrated material, the whole time under pressure from the press plate 21, upwards against, and into the compactor 3.

In the compactor 3 the material, thus disintegrated, is first compressed in the precompactor 4, by means of the material being fed forwards by the conically tapered screw section, as the material is prevented to rotate by the plate edges at the inside of the screw housing, as described above.

After that the compression continues in the intermediate compactor 5, as the compressed material is simultaneously flattened in a desired way.

Finally, the ready-made material is pressed out of the upwardly sloping compactor 3 through the terminal forming section 6, that contributes to the material obtaining a desired, proportionally even quality with regard to the degree of compressing. How this section 6 operates has also been described above and will not be repeated here.

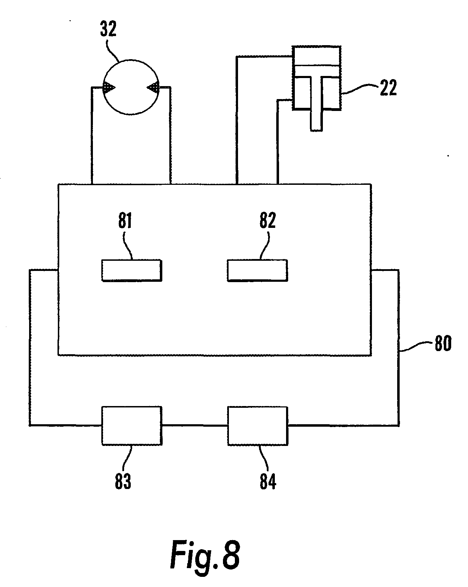

The apparatus operates automatically. The control system is schematically shown in Fig. 8. In the automatic system there is a direction valve 81 for the flow of hydraulic fluid to the hydraulic motor 32 and a direction valve 82 for the flow of hydraulic fluid to the press plate's actuator 22, composed by a hydraulic cylinder with its piston. Further, in a hydraulic circuit 80 there is both a pressure switch 83, and a computer 84, programmed to control the apparatus according to the invention according to a program stored in the computer. If the movable, rotating device, comprising the press 30 and the compacter screw 31, would, for any reason, get stuck, the pressure in the hydraulic circuit 80 rises, which is detected by the pressure switch 83 which gives a command to the valves 81 and 83, through the computer 84, so that the motor 32 is stopped and the piston in the hydraulic cylinder 22 and thereby the press plate 21 is raised somewhat. There-after, according to the program in the computer 84, an impuls is given to the direction valve 81 to take a position for reversed operation of the hydraulic motor 32.

Thus, the rotatable device 24 is rotated in a backwards feeding direction during 3 to 10 seconds, after which the press plate 21, by adjustment of the direction valve 82, again is lowered by the hydraulic cylinder 22 and the hydraulic motor 32 is operated in normal again, forward feeding direction by adjustment of the direction valve 81. This procedure may be repeated for a number of times until the machine again operates without pertubation. The automatic system is also programmed to eliminate possible arching close to the cutter 30 in the material being pressed against the cutter by the press plate 21. Thus, according to the program the movement device 24 is operated in normal, forward feeding direction during a certain period of time, for example 45 seconds, after which the press plate 21 is raised and the movement device 24 is rotated in normal forward feeding direction. This procedure is constantly repeated according to the program. Thereby, possible arches in the material are broken. Through this automatic way of operation the apparatus according to the invention may operate without perturbations and without control by specially educated personnel. The automatic system also prevents the machine/apparatus from being wrecked, prevents extreme load peaks and supports an even operation. Furthermore, the automatic system prevents that the press plate 21 always stops a short distance above the cutter 30, the cutter never going empty.

The process described above goes on until the level of not disintegrated material in the press section 1 has sunk to a preset level detected by a limit position detector not shown. There-after the press plate 21 is moved up and the cutter 30 and the compacter screw 31, i.e. the integrated rotatable device 24 stops due to the halt of the motor 32. If one wants to load more material into the press section 10 before the preset minimum level is reached, which often happens during practical operation, the motor 32 is stopped. In connection thereto the press plate 21 is automatically brought back to its upper position, after which the hatch 14 may again be opened and more material may be loaded in the press section. When the hatch is closed and sealed again, the process continues as above.

Since the disintegrator 2 and the compactor are upwardly sloping the discharge section may be arranged at such a height that a container 75 with a suitable size may be arranged beneath the mouth.

Thus, the ready-made material may fall down into the container 75 in the shape of well-compressed pieces being relatively thin and arch shaped according to the radius of the terminal forming section 6. Typically, they have a thickness of about 20 to 35 mm, a length of about 50 to 250 mm and a breadth of 50 to 100 mm. The material obtained in this way, have obtained suitable characteristics in terms of dimensions of shape and density, typically about 400 to 500 kg/m³ so that it may be baled to bigger transport and storage units or loaded in containers. When loaded in a container the material has a density of 250 to 300 kg/m3. The pieces are easily broken to smaller pieces with maintained density in each piece, i.e. typically about 400 to 500 kg/m3. The product is also well suited for disclosing at a receiver for fibre recycling or combustion without previous treatment.

## Claims

1. Apparatus for disintegrating cellulose containing package and wrapping materials containing corrugated cardboard and forming compacted units of the disintegrated material with a higher density than the material had before disintegration and compacting,
***characterized in***
- **that** the apparatus in sequence comprises a press section (1), a disintegrator (2) and a compactor (3),
- **that** the press section (1) is arranged with a first end and a second end and walls (11, 12, 13) between the first and second end, a loading opening, preferably possible to close, for the cellulose-containing material to be disintegrated and compacted, and pressing devices (20) arranged to forcibly compress the material loaded in the press section against the disintegrator (2) in the second end of the press section,
- **that** a multifunctional, rotatable, movable device (24) is arranged with a movement device (32) for rotating said movable device, which extends through the disintegrator and the compactor,
- **that** the disintegrator (2) comprises a disintegrator housing (26) with wall elements (53) at the inside of a bottom section of the disintegrating housing, and that disintegrating devices (35) are arranged on a rear part of said movable rotatable device (24) in the disintegrator housing, cooperating with said wall elements (53), and
- **that** the compactor comprises a screw housing (60) and that a front part of the movable, rotatable device forms a screw compactor (3) with an intake opening adjacent to the disintegrator and a discharge opening at the opposite end.

2. Apparatus according to claim 1, ***characterized in* that** the rear end of said movable, rotatable device (24) is constituted by a cutter (30), comprising said disintegrating devices (35).

3. Apparatus according to claim 2, ***characterized in* that** the cutter (30) is designed as a worm hob in the shape of a screw with thin threads (33), the threads being saw-tooth-shaped.

4. Apparatus according to claim 3, ***characterized in* that** the saw-tooth-shaped cutting teeth (35) make up said disintegrating device, and that said wall elements (53) at the inside of the bottom section of the disintegrator housing comprise fixed cuts (54), extending along the disintegrator housing and being provided to cooperate with the cutting teeth of the cutter.

5. Apparatus according to claim 4, ***characterized in* that** the cutting teeth are double-edged.

6. Apparatus according to any of claims 3-5, ***characterized in* that** the distance (**b**) between adjacent threads are 70 to 200 mm, that the cutting height (**h**) i.e. the radial distance from the thread root (34) to the tips (41-42) of the cutting edges is 40 to 100 mm, and that the tooth length (**l**) is 70 to 200 mm.

7. Apparatus according to any of claims 3-6, ***characterized in* that** the cutter (30) is double-threaded.

8. Apparatus according to any of the claims above, ***characterized in* that** said integrated, movable device (24) slopes with the discharge opening facing obliquely upwards.

9. Apparatus according to any of the claims above, ***characterized in* that** the cutter (30) has an outer diameter of 500 to 1000 mm at its end facing the screw compactor.

10. Apparatus according to claim 9, ***characterized in* that** the screw housing converges in the area of a first section of the compactor in a direction away from the disintegrator.

11. Apparatus according to claim 10, ***characterized in* that** said first section of the compactor (3) comprises a precompactor, that an intermediate compactor (5) and a terminal forming section (6) follow the precompactor, the material compressed in the precomprimator being provided with an extended, flat shape, before it leaves the terminal forming section.

12. Apparatus according to claim 11, ***characterized in* that** the terminal forming section (6) comprises a hopper-shaped channel for the compacted material, the channel diverging in the feeding direction, that said passage is limited in a mouth section by an outer movable ring (69), which under pressure from the material fed out may be backwardly moved in case of increased pressure, such that the passage is widened, and that force elements (73) are provided to move the movable ring (69) forwards as the pressure from the passing compressed material decreases.

13. Apparatus according to claim 9, ***characterized in* that** the discharge end of the compactor has a diameter of 250 to 600 mm and that its diameter is reduced with 25 to 75 % from the inlet end to the discharge end.

14. Apparatus according to any of the claims above, ***characterized in* that** the movable device has a speed of rotation of 2 to 10 rotations/minute, preferably 3 to 8 rotations/minute.

15. Apparatus according to claim 1, ***characterized in* that** said pressing device (20) comprises a actuator (22) and a press plate (21) with one side facing the material that shall be compressed against the disintegrator, this side being parallel with the axis of rotation of the multifunctional, rotatable device extending through the disintegrator (2) and the compactor (3).

16. Apparatus according to claim 14, ***characterized in* that** the press plate (21), by means of the actuator (22) of the press plate, presses the material being disintegrated against said multifunctional, movable device in the disintegrator (2) during disintegration, at which said multifunctional, movable device (24) is rotated in a first forwardly feeding direction of the material during disintegration against the compactor (3), that an automatic system (80) is provided to control the movement device (32) of the multifunctional, movable device (24) and the actuator (22) of the press plate (21), and that, at preset intervals, said automatic system (80) is arranged to rotate the multifunctional, movable device (24) in opposite direction during a short period of time after the same automatic system having first transmitted a command to the actuator (22) of the press plate to raise the press plate somewhat, and that then said automatic system is arranged to lower the press plate again, to resume pressing and to once more operate the functionally movable device in its normal forwardly feeding movement direction.

## Patentansprüche

1. Vorrichtung zum Zerkleinern von zellulosehaltige Verpackungs- und Umhüllungsmaterialien, die Wellpappe enthalten, und zum Formen von verdichteten Einheiten des zerkleinerten Materials mit einer höheren Dichte als das Material vor der Zerkleinerung und der Verdichtung aufwies, **dadurch gekennzeichnet,**
- **dass** die Vorrichtung in Abfolge einen Pressabschnitt (1), einen Zerkleinerer (2) und einen Verdichter (3) umfasst,
- **dass** der Pressabschnitt (1) mit einem ersten Ende und einem zweiten Ende und Wänden (11, 12, 13) zwischen dem ersten und zweiten Ende einer Beladeöffnung, wobei es bevorzugt möglich ist, zu schließen, für das zu zerkleinernde und zu verdichtende zellulosehaltige Material und Pressvorrichtungen (20) angeordnet ist, die eingerichtet sind, um unter Krafteinwirkung das in dem Pressabschnitt geladene Material gegen den Zerkleinerer (2) in dem zweiten Ende des Pressabschnitts zusammen zu pressen,
- **dass** eine multifunktionelle, drehbare, bewegliche Vorrichtung (24) mit einer Bewegungsvorrichtung (32) angeordnet ist, um die bewegliche Vorrichtung zu drehen, welche sich durch den Zerkleinerer und den Verdichter erstreckt,
- **dass** der Zerkleinerer (2) ein Zerkleinerergehäuse (26) mit Wandelementen (53) an der Innenseite eines unteren Abschnitts des Zerkleinerergehäuses umfasst und dass Zerkleinerungsvorrichtungen (35) auf einem hinteren Teil der beweglichen, drehbaren Vorrichtung (24) in dem Zerkleinerergehäuse angeordnet sind, zusammenwirkend mit den Wandelementen (53), und
- **dass** der Verdichter ein Schrauben-Gehäuse (60) umfasst und dass ein vorderer Teil der beweglichen, drehbaren Vorrichtung einen Schrauben-Verdichter (3) mit einer dem Zerkleinerer benachbarten Einlassöffnung und einer Entladeöffnung an dem gegenüberliegenden Ende bildet.

2. Vorrichtung gemäß Anspruch 1, **dadurch gekennzeichnet, dass** das hintere Ende der beweglichen, drehbaren Vorrichtung (24) durch eine Schneideinrichtung (30) gebildet ist, umfassend die Zerkleinerungsvorrichtungen (35).

3. Vorrichtung gemäß Anspruch 2, **dadurch gekennzeichnet, dass** die Schneideinrichtung (30) wie ein Schneckenabwalzfräser in der Form einer Schraube mit dünnen Gewinden (33) gestaltet ist, wobei die Gewinde sägezahnförmig sind.

4. Vorrichtung gemäß Anspruch 3, **dadurch gekennzeichnet, dass** die sägezahnförmigen Schneidzähne (35) die Zerkleinerervorrichtung bilden und dass die Wandelemente (53) auf der Innenseite des unteren Abschnitts des Zerkleinerergehäuses feste Abschnitte (54) umfassen, die sich entlang dem Zerkleinerergehäuse erstrecken und bereitgestellt sind, um mit den Schneidzähnen der Schneideinrichtung zusammenzuwirken.

5. Vorrichtung gemäß Anspruch 4, **dadurch gekennzeichnet, dass** die Schneidzähne zweischneidig sind.

6. Vorrichtung gemäß einem der Ansprüche 3 bis 5, **dadurch gekennzeichnet, dass** der Abstand (b) zwischen benachbarten Gewinden 70 bis 200 mm beträgt, dass die Schnitthöhe (h), d. h. der Radialabstand von dem Gewindefuß (34) zu den Spitzen (41-42) der Schnittkanten 40 bis 100 mm beträgt und dass die Zahnlänge (1) 70 bis 200 mm beträgt.

7. Vorrichtung gemäß einem der Ansprüche 3 bis 6, **dadurch gekennzeichnet, dass** die Schneideinrichtung (30) zweigängig ist.

8. Vorrichtung gemäß irgendeinem der vorherigen Ansprüche, **dadurch gekennzeichnet, dass** die integrierte bewegliche Vorrichtung (24) abgeschrägt ist, wobei die Entladeöffnung schräg nach oben gerichtet ist.

9. Vorrichtung gemäß irgendeinem der vorherigen Ansprüche, **dadurch gekennzeichnet, dass** die Schneideinrichtung (30) einen äußeren Durchmesser von 500 bis 1000 mm an seinem Ende aufweist, das dem Schrauben-Verdichter zugewandt ist.

10. Vorrichtung gemäß Anspruch 9, **dadurch gekennzeichnet, dass** das Schraubengehäuse in dem Bereich eines ersten Abschnitts des Verdichters in einer Richtung weg von dem Zerkleinerer zusammenläuft.

11. Vorrichtung gemäß Anspruch 10, **dadurch gekennzeichnet, dass** der erste Abschnitt des Verdichters (3) einen Vor-Verdichter umfasst, dass ein Zwischen-Verdichter (5) und ein Abschluss bildender Abschnitt (6) dem Vor-Verdichter folgen, wobei das in dem Vor-Verdichter zusammengepresste Material mit einer erweiterten, flachen Form versehen wird, bevor es den Abschluss bildenden Abschnitt verlässt.

12. Vorrichtung gemäß Anspruch 11, **dadurch gekennzeichnet, dass** der Abschluss bildende Abschnitt (6) einen trichterförmigen Kanal für das verdichtete Material umfasst, wobei der Kanal in der Einspeiserichtung auseinander läuft, dass der Durchgang in einem Mündungsabschnitt durch einen äußeren beweglichen Ring (69) begrenzt ist, der unter Druck von dem Material, das abgegeben wird, im Fall zunehmenden Drucks rückwärts bewegt werden kann, so dass der Durchgang geweitet wird, und dass Kraftelemente (73) bereitgestellt sind, um den beweglichen Ring (69) vorwärts zu bewegen, wenn der Druck von dem durchgehenden zusammengepressten Material abnimmt.

13. Vorrichtung gemäß Anspruch 9, **dadurch gekennzeichnet, dass** das Entlade-Ende des Verdichters einen Durchmesser von 250 bis 600 mm aufweist und dass sein Durchmesser vom Einlassende bis zum Entlade-Ende um 25 bis 75 % reduziert ist.

14. Vorrichtung gemäß einem der vorherigen Ansprüche, **dadurch gekennzeichnet, dass** die bewegliche Vorrichtung eine Rotationsgeschwindigkeit von 2 bis 10 Umdrehungen/Minute aufweist, bevorzugt 3 bis 8 Umdrehungen/Minute.

15. Vorrichtung gemäß Anspruch 1, **dadurch gekennzeichnet, dass** die Press-Vorrichtung (20) einen Aktuator (22) und eine Pressplatte (21) mit einer dem Material zugewandten Seite umfasst, das gegen den Zerkleinerer zusammenpresst werden soll, wobei diese Seite parallel zu der Rotationsachse der multifunktionellen, drehbaren Vorrichtung ist, die sich durch den Zerkleinerer (2) und den Verdichter (3) erstreckt.

16. Vorrichtung gemäß Anspruch 14, **dadurch gekennzeichnet, dass** die Pressplatte (21) mit Hilfe des Aktuators (22) der Pressplatte das zu zerkleinernde Material während einer Zerkleinerung gegen die multifunktionelle, bewegliche Vorrichtung in dem Zerkleinerer (2) presst, bei der die multifunktionelle, bewegliche Vorrichtung (24) während einer Zerkleinerung in einer ersten Vorwärts-Speiserichtung des Materials gegen den Verdichter (3) gedreht wird, dass ein automatisches System (80) bereitgestellt ist, um die Bewegungsvorrichtung (32) der multifunktionellen, beweglichen Vorrichtung (24) und den Aktuator (22) der Pressplatte (21) zu steuern, und dass das automatische System (80) eingerichtet ist, in voreingestellten Intervallen die multifunktionelle, bewegliche Vorrichtung (24) während einer kurzen Zeitdauer in entgegengesetzter Richtung zu drehen, nachdem das gleiche automatische System zuerst einen Befehl an den Aktuator (22) der Pressplatte übermittelt hat, um die Pressplatte etwas anzuheben, und dass das automatische System eingerichtet ist, um die Pressplatte dann wieder abzusenken, um das Pressen fortzusetzen und um die funktionell bewegliche Vorrichtung noch einmal in ihrer normale Vorwärts-Speisebewegungsrichtung anzutreiben.

## Revendications

1. Appareil pour désintégrer un emballage contenant de la cellulose et des matériaux d'enveloppement contenant du carton ondulé et pour former des unités compactes de matériau désintégré ayant une densité plus élevée que le matériau avait avant la désintégration et le compactage, **caractérisé**
- **en ce que** l'appareil comporte dans l'ordre une section de pression (1), un désintégrateur (2) et un compacteur (3),
- **en ce que** la section de pression (1) présente une première extrémité et une deuxième extrémité et des parois (11, 12, 13) entre la première et la deuxième extrémité, une ouverture de chargement, de préférence pouvant être fermée, en matériau contenant de la cellulose à désintégrer et à compacter, et des dispositifs de pression (20) disposés pour comprimer en force le matériau chargé dans la section de pression contre le désintégrateur (2) dans la deuxième extrémité de la section de pression,
- **en ce qu'**un dispositif (24) mobile, rotatif, multifonctionnel, est agencé avec un dispositif de mouvement (32) pour entraîner ledit dispositif mobile, qui s'étend à travers le désintégrateur et le compacteur,
- **en ce que** le désintégrateur (2) comporte un boîtier de désintégrateur (26) avec des éléments de paroi (53) à l'intérieur d'une section inférieure du boîtier de désintégration, et les dispositifs de désintégration (35) sont agencés sur une partie arrière dudit dispositif mobile et rotatif (24) dans le boîtier de désintégrateur, coopérant avec lesdits éléments de paroi (53), et
- **en ce que** le compacteur comporte un boîtier de vis (60) et une partie antérieure du dispositif mobile et rotatif forme un compacteur à vis (3) avec une ouverture d'admission adjacente au désintégrateur et une ouverture de décharge à l'extrémité opposée.

2. Appareil selon la revendication 1, **caractérisé en ce que** l'extrémité arrière dudit dispositif mobile et rotatif (24) est constitué par un couteau (30), comportant lesdits dispositifs de désintégration (35).

3. Appareil selon la revendication 2, **caractérisé en ce que** le couteau (30) est conçu comme mèche à spire sous forme d'une vis avec des filets minces (33), les filets étant en forme de dent de scie.

4. Appareil selon la revendication 3, **caractérisé en ce que** des dents de coupe en forme de dents de scie (35) composent ledit dispositif de désintégration, et **en ce que** lesdits éléments de paroi (53) à l'intérieur de la section inférieure du boîtier de désintégrateur comportent des contre-lames fixes (54), s'étendant le long du boîtier de désintégrateur et étant prévues pour coopérer avec les dents de coupe du couteau.

5. Appareil selon la revendication 4, **caractérisé en ce que** les dents de coupe sont à double bords tranchants.

6. Appareil selon l'une des revendications 3 à 5, **caractérisé en ce que** la distance (b) entre des filets adjacents est de 70 à 200 millimètres, **en ce que** la hauteur de coupe (h), c'est-à-dire la distance radiale depuis la racine d'un filet (34) jusqu'aux sommets (41-42) des bords de coupe, est de 40 à 100 millimètres, et **en ce que** la longueur de dent (I) est de 70 à 200 millimètres.

7. Appareil selon l'une des revendications 3 à 6, **caractérisé en ce que** le couteau (30) est à double filet.

8. Appareil selon l'une des revendications ci-dessus, **caractérisé en ce que** ledit dispositif mobile et intégré (24) est incliné, l'ouverture de décharge s'ouvrant vers le haut, en oblique.

9. Appareil selon l'une des revendications ci-dessus, **caractérisé en ce que** le couteau (30) a un diamètre externe allant de 500 à 1000 millimètres à son extrémité tournée vers le compacteur à vis.

10. Appareil selon la revendication 9, **caractérisé en ce que** le boîtier de vis converge vers une première section du compacteur dans une direction s'éloignant du désintégrateur.

11. Appareil selon la revendication 10, **caractérisé en ce que** cette ladite première section du compacteur (3) comporte un précompacteur, **en ce qu'**un compacteur intermédiaire (5) et une section terminale de formage (6) suivent le précompacteur, le matériau comprimé dans le précompacteur étant amené dans une forme plate et étendue avant qu'il quitte la section terminale de formage.

12. Appareil selon la revendication 11, **caractérisé en ce que** la section terminale de formage (6) comporte un canal en forme de trémie pour le matériau compacté, le canal divergeant dans la direction d'alimentation, **en ce que** ledit passage est délimité dans une section d'embouchure par un anneau mobile externe (69), qui, sous la pression du matériau alimenté, peut être déplacé en arrière en cas de pression accrue, de telle sorte que le passage est élargi, et **en ce que** des éléments de force (73) sont prévus pour déplacer l'anneau mobile (69) vers l'avant au fur et à mesure que la pression exercée par le matériau comprimé en cours de passage diminue.

13. Appareil selon la revendication 9, **caractérisé en ce que** l'extrémité de décharge du compacteur a un diamètre allant de 250 à 600 millimètres et **en ce que** son diamètre est réduit de 25 à 75 % depuis l'extrémité d'admission vers l'extrémité de décharge.

14. Appareil selon l'une des revendications ci-dessus, **caractérisé en ce que** le dispositif mobile a une vitesse de la rotation allant de 2 à 10 rotations/minute, de préférence de 3 à 9 rotations/minute.

15. Appareil selon la revendication 1, **caractérisé en ce que** ledit dispositif de pression (20) comporte un dispositif d'actionnement (22) et une plaque de pression (21) avec un côté tourné vers le matériau devant être comprimé contre le désintégrateur, ce côté étant parallèle à l'axe de rotation du dispositif rotatif multifonctionnel s'étendant à travers le désintégrateur (2) et le compacteur (3).

16. Appareil selon la revendication 14, **caractérisé en ce que** la plaque de pression (21), au moyen du dispositif d'actionnement (22) de la plaque de pression, serre le matériau désintégré contre ledit dispositif mobile multifonctionnel dans le désintégrateur (2) pendant la désintégration, durant laquelle ledit dispositif mobile multifonctionnel (24) est entraîné en rotation dans un premier sens, d'alimentation vers l'avant du matériau, durant la désintégration contre le compacteur (3), **en ce qu'**un système automatique (80) est prévu pour commander le dispositif de mouvement (32) du dispositif mobile multifonctionnel (24) et le dispositif d'actionnement (22) de la plaque de pression (21), et **en ce que**, à intervalles préréglés, ledit système automatique (80) est agencé pour entraîner en rotation le dispositif mobile multifonctionnel (24) dans le sens opposé pendant une période de temps brève après que le même système automatique ait en premier transmis une commande au dispositif d'actionnement (22) de la plaque de pression de soulever légèrement la plaque de pression, et qu'ensuite ce système automatique soit agencé pour abaisser à nouveau la plaque de pression, pour reprendre une mise en pression et pour, une nouvelle fois, actionner le dispositif fonctionnellement mobile dans son sens normal de mouvement d'alimentation vers l'avant.
